# EUROPÄISCHE PATENTSCHRIFT

(11) **EP 3 284 296 B1**
(45) Veröffentlichungstag und Bekanntmachung des Hinweises auf die Patenterteilung: **20.09.2023**
(21) Anmeldenummer: 16717886.2
(22) Anmeldetag: 14.04.2016
(51) Int. Cl.: H04W 28/02, H04L 47/28, H04L 47/30, H04L 47/31

(54) **VERFAHREN ZUM BESTIMMEN EINER KANALLAST UND VERFAHREN ZUM EINSTELLEN EINER VORVERARBEITUNG IN EINER FAHR-ZEUG-ZU-X-KOMMUNIKATION, FAHRZEUG-ZU-X-KOMMUNIKATIONSSYSTEM UND COMPUTERLESBARES SPEICHERMEDIUM**
METHOD FOR DETERMINING A CHANNEL LOAD AND METHOD FOR ADJUSTING A PREPROCESSING IN A VEHICLE-TO-X COMMUNICATION, VEHICLE-TO-X COMMUNICATION SYSTEM AND COMPUTER-READABLE STORAGE MEDIUM
PROCÉDÉ DE DÉTERMINATION D'UNE CHARGE DE CANAL ET PROCÉDÉ DE RÉGLAGE D'UN PRÉTRAITEMENT DANS UNE COMMUNICATION ENTRE VÉHICULES C2X, SYSTÈME DE COMMUNICATION ENTRE VÉHICULES C2X ET SUPPORT D'ENREGISTREMENT LISIBLE PAR ORDINATEUR

(30) Priorität: 17.04.2015 DE 102015207050
(43) Veröffentlichungstag der Anmeldung: 21.02.2018
(73) Patentinhaber: Continental Automotive Technologies GmbH, 30165 Hannover (DE)
(72) Erfinder: STÄHLIN, Ulrich, 65760 Eschborn (DE); SCHERPING, Richard, 65835 Liederbach am Taunus (DE); MENZEL, Marc, 35096 Weimar (Lahn) (DE)
(74) Vertreter: Continental Corporation
(86) Internationale Anmeldenummer: PCT/EP2016/058250
(87) Internationale Veröffentlichungsnummer: WO 2016/166230

(56) Entgegenhaltungen:
- DE-A1-102014 213 771
- US-A- 5 483 533
- US-A1- 2006 245 359
- US-A1- 2014 143 834
- US-B1- 8 892 347
- "Recommendation ITU-R M.1371-4 - Technical characteristics for an automatic identification system using time-division multiple access in the VHF maritime mobile band", , 30. April 2010 (2010-04-30), XP055273002, Gefunden im Internet: URL:https://www.itu.int/dms_pubrec/itu-r/r ec/m/R-REC-M.1371-4-201004-S!!PDF-E.pdf [gefunden am 2016-05-17]

## Beschreibung

Die Erfindung betrifft ein Verfahren zum Bestimmen einer Kanallast in einer Fahrzeug-zu-X-Kommunikation sowie ein Fahrzeug-zu-X-Kommunikationssystem und ein computerlesbares Speichermedium zum Ausführen eines solchen Verfahrens.

Fahrzeug-zu-X-Kommunikation, auch als Car-2-X-Kommunikation, C2X-Kommunikation oder V2X-Kommunikation bezeichnet, ist in Europa und den USA in der Standardisierung und befindet sich derzeit auf dem Weg zur Serieneinführung.

Grundsätzlich ist bei Fahrzeug-zu-X-Kommunikation die Datenmenge an empfangenen Daten sehr groß im Verhältnis zu den für die spezifischen, in einem Fahrzeug ausgeführten Anwendungen relevanten Daten. Häufig sind nur wenige Nachrichten wirklich für die Anwendungen relevant, alle anderen Nachrichten können grundsätzlich durch eine Vorverarbeitung frühzeitig verworfen werden, um die Systemlast zu reduzieren.

Auch wenn der Nutzen und die Wirksamkeit von Fahrzeug-zu-X-Kommunikation auf einer zügigen Einführung bei möglichst vielen Fahrzeugen beruht, ist es unrealistisch anzunehmen, dass innerhalb eines sehr kurzen Zeitraums alle Fahrzeuge mit einer entsprechenden Technik ausgestattet sein werden. Vor allem zu Beginn der Markteinführung von Fahrzeug-zu-X-Kommunikation werden nur wenige Fahrzeuge mit entsprechender Technik ausgerüstet sein, so dass eine Vorverarbeitung aufgrund der geringen Anzahl an empfangenen Nachrichten nicht notwendig ist. Erst mit zunehmender Verbreitung von Fahrzeug-zu-X-Kommunikation wird es erforderlich werden, eine Vorverarbeitung durchzuführen, um die tatsächlich verarbeiteten Nachrichten an die Systemleistung anzupassen. Im Laufe eines Fahrzeuglebens wird somit ein Wechsel erfolgen von einem Zustand, in welchem genügend Rechenleistung vorhanden ist, um ohne Vorverarbeitung arbeiten zu können, zu einem Zustand, in welchem eine Vorverarbeitung nötig ist, um mit der vorhandenen Rechenleistung weiterhin die Anwendungen durchzuführen.

Das Dokument DE 10 2014 213 771 A1 offenbart ein Filterverfahren zur Anpassung einer Rechenlast an eine Rechenkapazität eines Fahrzeug-zu-X-Kommunikationssystems, wobei mittels des Fahrzeug-zu-X-Kommunikationssystems Fahrzeug-zu-X-Botschaften empfangen und/oder versendet werden, wobei die empfangenen Fahrzeug-zu-X-Botschaften eine Verarbeitung durch das Fahrzeug-zu-X-Kommunikationssystem fordern, und wobei das Filterverfahren entscheidet, welche der empfangenen Fahrzeug-zu-X-Botschaften verarbeitet und welche der empfangenen Fahrzeug-zu-X-Botschaften verworfen werden.

Das Dokument US 2014/143834 A1 offenbart ein Verfahren zum Auswählen von Daten in einem Fahrzeug-zu-X-Kommunikationssystem, um eine Komplexität einer Decodierung zu verringern.

Das Dokument "Recommendation ITU-R M.1371-4 - Technical characteristics for an automatic identification system using time-division multiple access in the VHF maritime mobile band", (20100430) offenbart technische Charakteristika für ein automatisches Identifikationssystem unter Verwendung von Zeitmultiplex-Vielfachzugriff in maritimem VHF-Band.

Das Dokument US 5 483 533 B1 offenbart eine Mehrzahl von Terminals, welche über LAN zu einer Verkehrssteuerungseinheit verbunden sind.

Das Dokument US 8 892 347 B1 offenbart ein System und ein Verfahren zur knotenadaptiven Filterung und Verstopfungskontrolle für Sicherheits- und Mobilitätsanwendungen.

Das Dokument US 2006/0245359 A1 offenbart eine Prozessorüberlastkontrolle für Netzwerkknoten.

Es ist deshalb eine Aufgabe der Erfindung, ein Verfahren zum Bestimmen einer Kanallast in einer Fahrzeug-zu-X-Kommunikation sowie ein Verfahren zum Einstellen einer Vorverarbeitung in einer Fahrzeug-zu-X-Kommunikation vorzusehen, welche dieser angenommenen Entwicklung Rechnung tragen. Es ist des Weiteren eine Aufgabe der Erfindung, ein Fahrzeug-zu-X-Kommunikationssystem sowie ein computerlesbares Speichermedium zur Durchführung solcher Verfahren vorzusehen.

Dies wird erfindungsgemäß durch ein Verfahren zum Bestimmen einer Kanallast in einer Fahrzeug-zu-X-Kommunikation nach Anspruch 1, ein Verfahren zum Einstellen einer Vorverarbeitung in einer Fahrzeug-zu-X-Kommunikation nach Anspruch 11, ein Fahrzeug-zu-X-Kommunikationssystem nach Anspruch 13 sowie ein computerlesbares Speichermedium nach Anspruch 13 erreicht. Vorteilhafte Ausgestaltungen können beispielsweise den jeweiligen Unteransprüchen entnommen werden. Der Inhalt der Ansprüche wird durch ausdrückliche Inbezugnahme zum Inhalt der Beschreibung gemacht.

Die Erfindung betrifft ein Verfahren zum Bestimmen einer Kanallast in einer Fahrzeug-zu-X-Kommunikation, welches folgende Schritte aufweist:
- Empfangen einer Anzahl von Fahrzeug-zu-X-Nachrichten,
- Ermitteln einer Mehrzahl von Kanallastparametern basierend auf den Fahrzeug-zu-X-Nachrichten, und
- Ermitteln der Kanallast basierend zumindest auf den Kanallastparametern.

Mittels des erfindungsgemäßen Verfahrens ist es möglich, zunächst eine Anzahl von Kanallastparametern zu ermitteln, welche Aufschluss über die Anzahl der empfangenen und zu verarbeitenden Fahrzeug-zu-X-Nachrichten und gegebenenfalls auch über die dafür notwendige Rechenleistung geben. Hierzu kann nicht nur auf eine einfache Zählung von Nachrichten zurückgegriffen werden, sondern es können auch Kanallastparameter verwendet werden, welche speziell bestimmten Gegebenheiten hinsichtlich der Verarbeitung bestimmter Nachrichten und dem dafür erforderlichen Aufwand sowie der benötigten Rechenleistung Rechnung tragen. Durch den Zwischenschritt des Ermittelns einer Anzahl von Kanallastparametern kann somit die Kanallast erheblich passender für einen bestimmten Zweck, beispielsweise für die Einstellung einer Vorverarbeitung in einer Fahrzeug-zu-X-Kommunikation, bestimmt werden, als dies bei reinem Rückgriff auf eine einfache, direkt bestimmte Kanallast möglich wäre. Es kann auch von einer Pseudo-Kanallast oder von einer virtuellen oder generalisierten Kanallast gesprochen werden. Dies schließt jedoch nicht aus, dass eine einfache, direkt bestimmte Kanallast, welche beispielsweise von einem Kommunikationschip zur Verfügung gestellt werden kann, als Kanallastparameter, eventuell auch als einziger Kanallastparameter, verwendet wird.

Beispiele für Kanallastparameter, welche einzeln oder in beliebiger Kombination im Rahmen des Verfahrens verwendet werden können, werden weiter unten gegeben. Es sei verstanden, dass alle beliebigen Mengen bzw. Kombinationen der unterschiedlichen beschriebenen Kanallastparameter bzw. deren Ermittlungsvorschriften, welche in dieser Anmeldung angegeben werden, Bestandteil der Offenbarung dieser Anmeldung sind.

Die Kanallast wird typischerweise in einer Einheit angegeben, welche die Anzahl von Nachrichten in einer Zeiteinheit angibt, beispielsweise also in der Einheit s⁻¹. Es sei jedoch verstanden, dass es sich hier um eine berechnete Größe handeln kann, welche von der tatsächlich innerhalb der Zeiteinheit, beispielsweise einer Sekunde, empfangenen Anzahl von Nachrichten abweicht.

Gemäß einer Ausführung wird ein Kanallastparameter durch Zählen der Anzahl von innerhalb einer vorgegebenen Zeitdauer empfangenen Fahrzeug-zu-X-Nachrichten ermittelt. Dies entspricht einem einfachen Abzählen der Anzahl von empfangenen Fahrzeug-zu-X-Nachrichten, wodurch ein unmittelbarer Rückschluss auf die von anderen Fahrzeugen oder anderen Einheiten gesendeten und vom Fahrzeug empfangenen Nachrichten ermöglicht wird.

Gemäß einer Ausführung wird ein Kanallastparameter durch folgende Schritte ermittelt:
- Speichern jeder empfangenen Fahrzeug-zu-X-Nachricht mit einem Zeitstempel,
- Ermitteln einer Zeitspanne zwischen zwei nacheinander empfangenen Fahrzeug-zu-X-Nachrichten, und
- Ermitteln des Kanallastparameters basierend auf der Zeitspanne.

Es sei verstanden, dass der Zeitstempel vorzugsweise aus einer internen Uhr stammt. Es kann jedoch auch eine andere Zeitreferenz, beispielsweise eine globale Zeitreferenz wie eine aus einem Satellitennavigationssystem erhaltene oder eine per Funk übermittelte Zeitreferenz, verwendet werden. Des Weiteren sei verstanden, dass beim Schritt des Ermittelns des Kanallastparameters basierend auf der Zeitspanne vorzugsweise eine Inversion der Zeitspanne erfolgt. Beträgt beispielsweise der Abstand zwischen zwei empfangenen Nachrichten 10 ms, so kann dies in einen Kanallastparameter von 100 s⁻¹ umgewandelt werden.

Bei der eben beschriebenen Vorgehensweise zum Ermitteln eines Kanallastparameters kann auf das Zählen von Nachrichten verzichtet werden. Stattdessen kann auf die Zeitstempel zurückgegriffen werden, welche ohnehin für diverse andere Zwecke, beispielsweise für eine korrekte Zuordnung des Eingangs von Nachrichten bei Anwendungen, für welche dies relevant ist, häufig benötigt werden. Auf zusätzliche Rechenoperationen, welche zum Zählen von Nachrichten innerhalb einer bestimmten Zeitspanne erforderlich sind, kann somit verzichtet werden.

Bei der eben beschriebenen Ausführung wird der Kanallastparameter gemäß einer Weiterbildung basierend auf einem Mittelwert oder einem Median einer vorgegebenen Anzahl von Zeitspannen ermittelt. Somit wird nicht nur eine Zeitspanne zwischen zwei unmittelbar nacheinander empfangenen Nachrichten zur Ermittlung des Kanallastparameters verwendet, sondern es werden mehrere Nachrichten für die Ermittlung des Kanallastparameters bzw. deren jeweilige Abstände zur vorherigen und/oder nächsten Nachricht herangezogen. Dabei kann über eine beliebige Anzahl von Nachrichten oder auch über eine beliebige vorgegebene Zeitdauer gemittelt oder ein Median ermittelt werden. Es sei verstanden, dass auch andere Berechnungsverfahren als die Bildung eines Mittelwerts oder eines Medians, beispielsweise die Bildung eines gewichteten Mittelwerts, verwendet werden können. Ebenso kann eine Mittelwertbildung, eine Medianbildung oder eine andere Rechenoperation auch erst nach Inversion durchgeführt werden. Das Berechnungsverfahren kann dabei beispielsweise blockweise oder mit gleitendem Zeitfenster verwendet werden.

Erfindungsgemäß wird ein Kanallastparameter der Mehrzahl von Kanallastparametern durch folgende Schritte ermittelt:
- Speichern jeder empfangenen Fahrzeug-zu-X-Nachricht in einem Pufferspeicher, wobei Anwendungen jeweils zyklisch Fahrzeug-zu-X-Nachrichten aus dem Pufferspeicher auslesen, und
- Ermitteln des Kanallastparameters basierend auf der Anzahl von im Pufferspeicher gespeicherten Fahrzeug-zu-X-Nachrichten.

Ein derart ermittelter Kanallastparameter gibt einen unmittelbaren Aufschluss über die Verarbeitungsreserve im Pufferspeicher. Unter einem Pufferspeicher wird dabei vorzugsweise ein Speicher verstanden, welcher empfangene Fahrzeug-zu-X-Nachrichten speichert und zum Abholen durch die jeweiligen Anwendungen zur Verfügung stellt. Die Anwendungen sind dabei bevorzugt derart konfiguriert, dass einige oder alle der Anwendungen in einem jeweiligen, vorzugsweise individuell einstellbaren oder vorgegebenen Intervall im Pufferspeicher nachsehen, ob relevante Nachrichten vorhanden sind, und diese dann aus dem Pufferspeicher auslesen und verarbeiten. Der Pufferspeicher kann dabei vorzugsweise Nachrichten für eine Mehrzahl von unterschiedlichen Anwendungen zur Verfügung stellen. Nach dem Auslesen kann eine jeweilige Anwendung die Nachricht im Pufferspeicher löschen, so dass wieder Platz für eine neue Nachricht vorhanden ist, wobei die Anwendung bevorzugt die Nachricht dann und/oder nur dann löscht, wenn diese nicht auch noch für eine andere Anwendung relevant ist.

Gemäß einer Ausführung wird ein Kanallastparameter durch folgende Schritte ermittelt:
- Speichern jeder empfangenen Fahrzeug-zu-X-Nachricht in einem Pufferspeicher, wobei Anwendungen jeweils zyklisch Fahrzeug-zu-X-Nachrichten aus dem Pufferspeicher auslesen,
- Ermitteln einer Anzahl von Fahrzeug-zu-X-Nachrichten desselben Senders, welche im Pufferspeicher gespeichert sind, und
- Ermitteln des Kanallastparameters basierend auf der Anzahl von Fahrzeug-zu-X-Nachrichten desselben Senders.

Mittels der eben beschriebenen Vorgehensweise zum Ermitteln eines Kanallastparameters wird berücksichtigt, dass von einer besonders hohen Kanallast ausgegangen werden kann, wenn mehrere Fahrzeug-zu-X-Nachrichten vom gleichen Absender im Pufferspeicher vorhanden sind. Dies kann beispielsweise an einer Sender-ID erkannt werden. Auch dies gibt einen Aufschluss über die Verarbeitungsreserve der Anwendungen. Hinsichtlich des Pufferspeichers gilt das weiter oben bereits Erwähnte.

Bevorzugt kann dabei zusätzlich ermittelt werden und beim Ermitteln des Kanallastparameters berücksichtigt werden, wie viele Fahrzeug-zu-X-Nachrichten desselben Senders gleichen Typs sind. Dabei kann beispielsweise von einer besonders hohen Kanallast nur dann ausgegangen werden, wenn Nachrichten des gleichen Senders auch vom gleichen Typ sind.

Typische, in einer Fahrzeug-zu-X-Kommunikation verwendete Typen sind beispielsweise Cooperative Awareness Message (CAM), Decentralized Environment Notification Message (DENM), Basic Safety Message (BSM), Signal Phase and Timing (SPAT) oder topographische und kartenbezogene Informationen (TOPO). Durch die Berücksichtigung von Typen wird der Tatsache Rechnung getragen, dass ein Sender kurz hintereinander unterschiedliche Nachrichtentypen verwenden kann, ohne dass dies zwingend auf eine besonders hohe Kanallast schließen lässt.

Bei dem Pufferspeicher kann es sich um einen First-In-First-Out-Pufferspeicher handeln. Dieser wird auch als FiFo-Pufferspeicher bezeichnet. Dabei wird typischerweise eine später in den Pufferspeicher gelangte Nachricht auch später ausgelesen.

Gemäß einer Ausführung wird ein Kanallastparameter durch folgende Schritte ermittelt:
- Speichern von Fahrzeug-zu-X-Nachrichten, welche einer Authentifizierung zu unterziehen sind, in einem Security-Pufferspeicher, und
- Ermitteln des Kanallastparameters basierend auf der Anzahl von im Security-Pufferspeicher gespeicherten Nachrichten.

Bei dem Security-Pufferspeicher handelt es sich dabei typischerweise um einen Pufferspeicher, aus dem eine Security-Einheit die Fahrzeug-zu-X-Nachrichten ausliest und authentifiziert. Es handelt sich dabei bevorzugt um einen First-In-First-Out (FiFo)-Pufferspeicher. Eine Authentifizierung kann beispielsweise notwendig sein, wenn ermittelt werden soll, ob die Fahrzeug-zu-X-Nachricht von einem autorisierten Sender stammt oder wenn sichergestellt werden soll, dass eine Fahrzeug-zu-X-Nachricht auch tatsächlich von einem bestimmten, beispielsweise angegebenen Sender stammt. Damit wird einer Beeinflussung der Fahrzeug-zu-X-Kommunikation durch Unbefugte vorgebeugt.

Typischerweise wird bei der eben beschriebenen Vorgehensweise zum Ermitteln eines Kanallastparameters basierend auf einem Security-Pufferspeicher nur ein kleiner Wert von beispielsweise 1, 2 oder 3 Nachrichten im Security-Pufferspeicher toleriert, bevor bereits von einer erhöhten Kanallast ausgegangen wird. Dies liegt daran, dass bei einer Security-Einheit, welche Nachrichten verifiziert, typischerweise kein Verarbeitungsrückstau geduldet werden kann. Dies würde ein Nadelöhr des gesamten Systems darstellen, weil nicht authentifizierte Nachrichten nicht weiterverarbeitet werden könnten.

Gemäß einer Ausführung ist ein Kanallastparameter ein von einem Kommunikationschip empfangener Wert, welcher anzeigend ist für die Kanallast. Damit kann als einer von mehreren Kanallastparametern oder eventuell auch als einziger Kanallastparameter ein von einem Kommunikationschip empfangener Wert verwendet werden, welcher unmittelbar Aufschluss über die Kanallast gibt. Es sei verstanden, dass insbesondere durch die Kombination von mehreren anderen Kanallastparametern mit einem von einem Kommunikationschip empfangenen Wert zu einer Modifizierung des von dem Kommunikationschip empfangenen Werts gelangt werden kann, welcher den tatsächlichen Gegebenheiten der Verarbeitung besser Rechnung trägt.

Erfindungsgemäß wird beim Schritt des Ermittelns der Kanallast eine erhöhte Kanallast ermittelt, wenn mehr als die Hälfte aller beim Schritt des Ermittelns der Kanallast berücksichtigten Kanallastparameter eine erhöhte Kanallast anzeigen.

Bei einer erhöhten Kanallast kann es sich beispielsweise um eine über einen Schwellenwert erhöhte Kanallast handeln. Es soll also in diesem Fall typischerweise bestimmt werden, ob die Kanallast einen bestimmten Schwellenwert überschreitet. Bei der eben beschriebenen Ausführung wird von einer erhöhten Kanallast erst dann ausgegangen, wenn mehr als die Hälfte der Kanallastparameter eine erhöhte Kanallast anzeigen, beispielsweise also den Schwellenwert überschreiten. Es sei verstanden, dass anstelle der Hälfte der verwendeten Kanallastparameter auch ein beliebiger anderer Anteil der verwendeten Kanallastparameter entsprechend verwendet werden kann. Diese können auch gewichtet werden.

Gemäß einer Ausführung wird beim Schritt des Ermittelns der Kanallast eine erhöhte Kanallast nur dann ermittelt, wenn einer oder mehrere Kanallastparameter über einen vorbestimmten Zeitraum eine erhöhte Kanallast anzeigen. Es kann auch beim Schritt des Ermittelns der Kanallast ein zeitlicher Tiefpass angewendet werden. Derartige Ausführungen können dafür sorgen, dass nicht gleich beim kurzzeitigen Ermitteln einer erhöhten Kanallast, beispielsweise also beim kurzzeitigen Überschreiten eines Schwellenwerts, von einer erhöhten Kanallast ausgegangen wird und entsprechende Maßnahmen ergriffen werden. Ein zeitlicher Tiefpass kann dabei beispielsweise durch gleitende Mittelwertbildung oder andere bekannte Verfahren realisiert werden.

Gemäß einer Ausführung wird jede Fahrzeug-zu-X-Nachricht bei Verwendung in einer Ermittlung eines Kanallastparameters mit einem Komplexitätsfaktor gewichtet. Der Komplexitätsfaktor ist dabei ein Maß für die zu erwartende Rechenlast in weiteren Verarbeitungsschritten. Damit kann berücksichtigt werden, dass unterschiedliche Nachrichten eine unterschiedliche Rechenlast in weiteren Verarbeitungsschritten benötigen.

Beispielsweise kann berücksichtigt werden, ob eine Signatur einer Nachricht bereits bekannt und/oder verifiziert ist. Beispielsweise kann eine Nachricht mit bereits bekannter oder verifizierter Signatur mit einem Faktor 0,5 gewichtet werden, wohingegen eine Nachricht mit noch nicht bereits bekannter oder verifizierter Signatur mit einem Faktor 1 gewichtet wird.

Eine Unterscheidung kann auch nach Nachrichtentypen erfolgen. Beispielsweise kann eine Decentralized Environment Notification Message (DENM) aufgrund umfangreicher folgender Berechnungen mit einem Faktor 1,5 gewichtet werden, während eine Cooperative Awareness Message (CAM) mit einem Faktor 1 und eine MAP-, TOPO-oder SPAT-Nachricht mit einem Faktor 3 gewichtet werden kann, da diese hohe Datenmengen beinhalten. Eine Beacon-Nachricht kann beispielsweise mit einem Faktor 0,5 gewertet werden.

Es sei verstanden, dass die angegebenen Zahlenwerte für Gewichtungen hier lediglich Beispiele sind, und dass insbesondere auch jeweilige Intervalle um die angegebenen Werte mit einer jeweiligen Untergrenze von 0,1, 0,2, 0,3, 0,4 oder 0,5 unter diesem Wert und einer Obergrenze von 0,1, 0,2, 0,3, 0,4 oder 0,5 über diesem Wert verwendet werden können. Derartige Intervalle mit beliebigen Kombinationen von Unter- und Obergrenzen gelten als Bestandteil der Offenbarung dieser Anmeldung.

Die Erfindung betrifft des Weiteren ein Verfahren zum Einstellen einer Vorverarbeitung in einer Fahrzeug-zu-X-Kommunikation, welches folgende Schritte aufweist:
- Bestimmen einer Kanallast mittels eines erfindungsgemäßen Verfahrens zum Bestimmen einer Kanallast in einer Fahrzeug-zu-X-Kommunikation,
- Ermitteln, ob die Kanallast über einen Vorverarbeitungsschwellenwert erhöht ist,
- und abhängig davon
- Durchführen einer Vorverarbeitung, insbesondere eines Ausfilterns von Fahrzeug-zu-X-Nachrichten, wenn die Kanallast über den Vorverarbeitungsschwellenwert erhöht ist, sowie
- nicht Durchführen einer Vorverarbeitung, insbesondere eines Ausfilterns von Fahrzeug-zu-X-Nachrichten, wenn die Kanallast nicht über den Vorverarbeitungsschwellenwert erhöht ist.

Mittels des eben erwähnten Verfahrens kann erreicht werden, dass eine typischerweise Nachrichten ausfilternde Vorverarbeitung nur dann erfolgt, wenn die Kanallast so hoch ist, dass die Verarbeitungskapazität zur Verarbeitung der empfangenen Fahrzeug-zu-X-Nachrichten ohne Vorverarbeitung nicht mehr ausreicht. Es können auf die gleiche Weise jedoch auch andere Stufen einer Vorverarbeitung gesteuert werden.

Das Verfahren kann beispielsweise derart ausgeführt werden und/oder dafür sorgen, dass in einer Zeiteinheit immer die gleiche Anzahl von Nachrichten oder eine in etwa gleiche Anzahl von Nachrichten an Anwendungen weitergegeben werden, sofern genug Nachrichten zur Verfügung stehen. Die Vorverarbeitung kann beispielsweise derart ausgeführt werden, dass je nach Kanallast mehr oder weniger Nachrichten ausgefiltert werden.

Typischerweise wird hier von einer Vorverarbeitung ausgegangen, welche irrelevante oder weniger relevante Fahrzeug-zu-X-Nachrichten ausfiltert und somit verhindert, dass diese den Anwendungen oder anderen Verarbeitungsschritten zugeführt werden. Beispielsweise kann ein Vorverarbeitungsschwellenwert einen Wert von 30 s⁻¹, 50 s⁻¹ oder einen Wert zwischen 30 s⁻¹ und 50 s⁻¹ annehmen.

Gemäß einer Ausführung weist das Verfahren ferner folgende Schritte auf:
- Ermitteln, ob die Kanallast über einen Überwachungsschwellenwert erhöht ist, wobei der Überwachungsschwellenwert kleiner ist als der Vorverarbeitungsschwellenwert,
- und abhängig davon
- Durchführen einer Überwachung, wenn die Kanallast über den Überwachungsschwellenwert erhöht ist, sowie
- nicht Durchführen einer Überwachung, wenn die Kanallast nicht über den Überwachungsschwellenwert erhöht ist.

Mittels des eben beschriebenen Vorgehens kann eine Überwachung aktiviert werden, wenn der Überwachungsschwellenwert überschritten wurde, der Vorverarbeitungsschwellenwert jedoch noch nicht überschritten wurde. Damit kann eine Überwachung beginnen, welche bei manchen Vorverarbeitungsverfahren die Voraussetzung für eine dann folgende Vorverarbeitung ist oder diese zumindest erleichtert oder verbessert. Beispielsweise können Nachrichten gespeichert und in gewisser Hinsicht ausgewertet werden oder es kann eine auf den Nachrichten basierende Historie aufgebaut werden. Die Überwachung sortiert dabei typischerweise noch keine Nachrichten aus, so dass alle Nachrichten den Anwendungen oder weiteren anderen Verarbeitungsschritten zugeführt werden, solange der Vorverarbeitungsschwellenwert noch nicht überschritten ist.

Der Überwachungsschwellenwert kann beispielsweise zwischen 25 s⁻¹ und 35 s⁻¹, insbesondere bei 30 s⁻¹ liegen.

Es sei verstanden, dass alle hierin beschriebenen Verfahren, bei welchen bei Überschreiten eines Schwellenwerts eine Aktion ausgelöst wird, beispielsweise eine Überwachung oder eine Vorverarbeitung durchgeführt wird, auch entsprechend umgekehrt durchgeführt werden können. Es kann also beispielsweise bei Unterschreiten des jeweiligen Schwellenwerts die Überwachung oder die Vorverarbeitung wieder beendet werden. Es sei des Weiteren verstanden, dass auch weitere Schwellenwerte als die genannten verwendet werden können, um entsprechend Funktionen der Vorverarbeitung, Stufen der Vorverarbeitung oder andere Mechanismen ein- oder auszuschalten. Beispielsweise kann also auch ein dritter Schwellenwert verwendet werden. Dabei können auch Hysteresen um die Schwellwerte verwendet werden, um ein zu häufiges bzw. hektisches Umschalten zu vermeiden.

Es sei des Weiteren verstanden, dass auch Parameter der Vorverarbeitung mittels Schwellenwerten angepasst werden können. Beispiele hierfür sind:
- Herabsetzen/Hinaufsetzen von Entfernungsschwellenwerten und/oder Time-to-Collision-Schwellenwerten, beispielsweise in einer Relevanzfilterung, bei steigender/fallender Kanallast;
- Deaktivieren/Aktivieren von bestimmten Relevanzfilteralgorithmen, insbesondere aufwändigeren Relevanzfilteralgorithmen, sowie zusätzlichen Berechnungen wie beispielsweise Plausibilisierungen bei steigender/fallender Kanallast;
- Deaktivieren/Aktivieren des Ausfilterns von Informationen, wobei andere Teile der Vorverarbeitung wie Plausibilisierung aktiv bleiben, bei steigender/fallender Kanallast.

Prinzipiell ist auch eine permanente Anpassung der Parameter denkbar. Dies könnte beispielsweise dadurch implementiert werden, dass die Parameter laufend anhand der Kanallast dynamisch ermittelt werden, so dass nicht nur beim Überschreiten oder Unterschreiten von Schwellenwerten eine Anpassung erfolgt. Es können also beispielsweise Formeln oder Algorithmen zum Ermitteln der Parameter hinterlegt sein.

Bei der Anpassung von Entfernungsschwellenwerten auf Basis der Kanallast kann sich ein Verhalten ergeben, das mit der aus dem Mobilfunkbereich bekannten Zellatmung vergleichbar ist.

Die Erfindung betrifft des Weiteren ein Fahrzeug-zu-X-Kommunikationssystem, welches zur Ausführung eines erfindungsgemäßen Verfahrens gemäß einer oder mehrerer der hierin beschriebenen Ausführungen ausgebildet ist. Das Fahrzeug-zu-X-Kommunikationssystem kann beispielsweise Prozessormittel und Speichermittel aufweisen, wobei in den Speichermitteln Programmcode gespeichert ist, bei dessen Ausführung die Prozessormittel ein solches Verfahren ausführen.

Die Erfindung betrifft des Weiteren ein computerlesbares Speichermedium, welches Programmcode enthält, bei dessen Ausführung durch einen Prozessor oder durch ein Fahrzeug-zu-X-Kommunikationssystem ein erfindungsgemäßes Verfahren gemäß einer oder mehrerer der hierin beschriebenen Ausführungen ausgeführt wird.

Sowohl bei dem Fahrzeug-zu-X-Kommunikationssystem wie auch bei dem computerlesbaren Speichermedium kann auf alle hierin beschriebenen Ausführungen und Varianten der erfindungsgemäßen Verfahren zurückgegriffen werden.

Es sei verstanden, dass ein Fahrzeug-zu-X-Kommunikationssystem auch als Fahrzeug-zu-X-Kommunikationsmodul bezeichnet werden kann oder ein solches beinhalten kann.

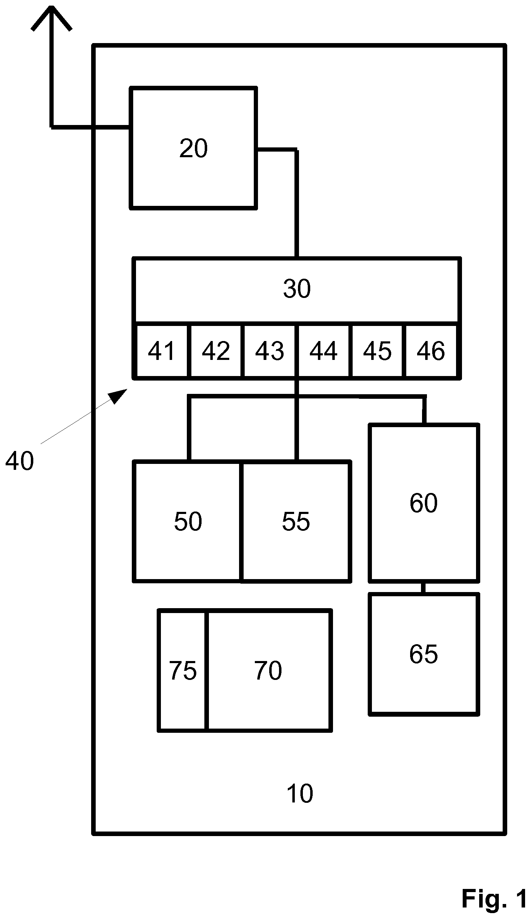

Weitere Merkmale und Vorteile wird der Fachmann dem nachfolgend mit Bezug auf die beigefügte Zeichnung beschriebenen Ausführungsbeispiel entnehmen. Dabei zeigt Fig. 1 ein Fahrzeug-zu-X-Kommunikationsmodul, welches zur Ausführung eines erfindungsgemäßen Verfahrens ausgebildet ist.

Fig. 1 zeigt ein Fahrzeug-zu-X-Kommunikationsmodul 10, welches vorliegend ein Fahrzeug-zu-X-Kommunikationssystem bildet. Das Fahrzeug-zu-X-Kommunikationsmodul 10 weist ein Vorverarbeitungsmodul 20 auf, welches zum Empfang, zur Vorverarbeitung und zur Überwachung von Fahrzeug-zu-X-Nachrichten aus einer Fahrzeug-zu-X-Kommunikation ausgebildet ist. Hierzu ist es mit einer nicht weiter beschriebenen, nur schematisch dargestellten Antenne verbunden.

Das Fahrzeug-zu-X-Kommunikationsmodul 10 weist ferner einen Pufferspeicher 30 auf, in welchem das Vorverarbeitungsmodul 20 empfangene Fahrzeug-zu-X-Nachrichten speichert. In dem Pufferspeicher 30 sind vorliegend insgesamt sechs Fahrzeug-zu-X-Nachrichten 41, 42, 43, 44, 45, 46 gespeichert, welche summarisch mit dem Bezugszeichen 40 bezeichnet werden. Aus dem Pufferspeicher 30 können sich Anwendungen oder andere Einheiten des Fahrzeug-zu-X-Kommunikationsmoduls 10 die Nachrichten 40 herausholen und weiterverarbeiten.

Beispielhaft sind in dem Fahrzeug-zu-X-Kommunikationsmodul 10 eine erste Anwendung 50 und eine zweite Anwendung 55 gezeigt. Diese sind in jeweiligen Schaltungen implementiert. Es sei verstanden, dass ein typisches Fahrzeug-zu-X-Kommunikationsmodul 10 eine Vielzahl von unterschiedlichen Anwendungen beinhaltet oder auch Nachrichten für extern laufende Anwendungen zur Verfügung stellen kann.

Das Fahrzeug-zu-X-Kommunikationsmodul 10 weist des Weiteren einen Security-Pufferspeicher 60 und eine damit verbundene Security-Einheit 65 auf. In den Security-Pufferspeicher 60 werden alle Nachrichten geschrieben, welche authentifiziert werden sollen. Die Security-Einheit 65 holt sich die im Security-Pufferspeicher 60 gespeicherten Nachrichten sukzessive heraus und überprüft, ob diese vom angegebenen Absender stammen. Der Security-Pufferspeicher 60 ist dabei als First-In-First-Out (FiFo)-Pufferspeicher ausgebildet.

Das Fahrzeug-zu-X-Kommunikationsmodul 10 weist des Weiteren eine Auswerteeinheit 70 auf. Die Auswerteeinheit 70 weist wiederum eine interne Uhr 75 auf, welche eine lokale Zeitreferenz zur Verfügung stellt.

Die Auswerteeinheit 70 ist dazu ausgebildet, ein erfindungsgemäßes Verfahren gemäß einer möglichen Implementierung auszuführen. Es sei ausdrücklich darauf hingewiesen, dass dies lediglich eine mögliche Implementierung des erfindungsgemäßen Verfahrens darstellt, und dass eine Vielzahl von Varianten davon möglich sind. Es sei des Weiteren darauf hingewiesen, dass nicht alle Signalwege in Fig. 1 gezeigt sind, um die Übersichtlichkeit zu erhöhen.

Die Auswerteeinheit 70 versieht zunächst jede von der Vorverarbeitungseinheit 20 in den Pufferspeicher 30 gespeicherte Nachricht 40 mit einem Zeitstempel, wozu die Uhr 75 verwendet wird.

Nach jeder eingegangenen Nachricht vergleicht sie den Zeitstempel der eben empfangenen Nachricht mit dem Zeitstempel der vorher empfangenen Nachricht. Als Differenz zwischen diesen beiden Zeitstempeln wird eine Zeitspanne ermittelt, welche die Differenz zwischen den Zeiten anzeigt, zu welchen diese Nachrichten empfangen bzw. in den Pufferspeicher 30 geschrieben wurden.

Die Auswerteeinheit 70 ermittelt nun einen ersten Kanallastparameter dadurch, dass sie jeweils einen Mittelwert über zehn Zeitspannen bildet und von einer derart ermittelten, gemittelten Zeitspanne das Inverse bildet. Dies entspricht einem Wert, welcher einen mittleren Eingang von Nachrichten pro Sekunde anzeigt.

Des Weiteren überwacht die Auswerteeinheit 70 laufend die Anzahl an Nachrichten, welche sich aktuell im Security-Pufferspeicher 60 befinden. Dieser Wert wird mit einem Faktor von 10 multipliziert und mit der Einheit s⁻¹ versehen. Der hieraus ermittelte Wert ergibt einen zweiten Kanallastparameter.

Sofern einer der beiden Kanallastparameter einen Überwachungsschwellenwert von 30 s⁻¹ überschreitet, weist die Auswerteeinheit 70 die Vorverarbeitungseinheit 20 an, mit einer Überwachung der empfangenen Nachrichten zu beginnen. Dies bedeutet noch nicht, dass Nachrichten ausgefiltert werden, aber es werden Überwachungsfunktionen aktiviert, welche zum schnellen Start einer Vorverarbeitung benötigt werden. Beispielsweise werden bestimmte Parameter der empfangenen Nachrichten abgespeichert und überwacht.

Wenn einer der beiden Kanallastparameter einen Vorverarbeitungsschwellenwert von 50 s⁻¹ überschreitet, so weist die Auswerteeinheit 70 die Vorverarbeitungseinheit 20 an, eine Vorverarbeitung durchzuführen. Dabei werden irrelevante oder weniger relevante Nachrichten ausgefiltert und erst gar nicht in den Pufferspeicher 30 geschrieben. Damit wird die Systembelastung deutlich reduziert und es wird sichergestellt, dass das Fahrzeug-zu-X-Kommunikationsmodul 10 so viele empfangene Nachrichten verarbeitet, wie es auch tatsächlich verarbeiten kann.

Bei einer solchen Ausführung kann beispielsweise davon gesprochen werden, dass der höhere der beiden Kanallastparameter die Kanallast angibt. Es wird somit bei der hier beschriebenen Implementierung lediglich der höhere der beiden Kanallastparameter berücksichtigt, so dass beim Überschreiten einer der beiden Grenzwerte durch einen der beiden Kanallastparameter der Wert des anderen Kanallastparameters keine Rolle mehr spielt. Dies entspricht einer Ausführung, in welcher bereits beim Vorliegen von Anzeichen für eine mögliche Systemüberlastung die Vorverarbeitung bzw. die Überwachung aktiviert werden, um einer Überlastung des Fahrzeug-zu-X-Kommunikationsmoduls 10 entgegenzuwirken.

Es sei verstanden, dass das Fahrzeug-zu-X-Kommunikationsmodul 10 typischerweise in einem Kraftfahrzeug, beispielsweise einem Automobil, einem Zweirad oder einem Lastkraftwagen eingebaut ist oder für einen solchen Einbau vorgesehen ist und entsprechend verwendet wird. Es sei des Weiteren verstanden, dass das Fahrzeug-zu-X-Kommunikationsmodul 10 typischerweise Schnittstellen zu anderen Fahrzeugkomponenten sowie weitere Funktionalitäten aufweist. Auf diese wird zur Vereinfachung der Darstellung und Beschreibung hier nicht weiter eingegangen.

Allgemein sei darauf hingewiesen, dass unter Fahrzeug-zu-X-Kommunikation insbesondere eine direkte Kommunikation zwischen Fahrzeugen und/oder zwischen Fahrzeugen und Infrastruktureinrichtungen verstanden wird. Beispielsweise kann es sich also um Fahrzeug-zu-Fahrzeug-Kommunikation oder um Fahrzeug-zu-Infrastruktur-Kommunikation handeln. Sofern im Rahmen dieser Anmeldung auf eine Kommunikation zwischen Fahrzeugen Bezug genommen wird, so kann diese grundsätzlich beispielsweise im Rahmen einer Fahrzeug-zu-Fahrzeug-Kommunikation erfolgen, welche typischerweise ohne Vermittlung durch ein Mobilfunknetz oder eine ähnliche externe Infrastruktur erfolgt und welche deshalb von anderen Lösungen, welche beispielsweise auf ein Mobilfunknetz aufbauen, abzugrenzen ist. Beispielsweise kann eine Fahrzeug-zu-X-Kommunikation unter Verwendung der Standards IEEE 802.11p oder IEEE 1609.4 erfolgen. Eine Fahrzeug-zu-X-Kommunikation kann auch als C2X-Kommunikation bezeichnet werden. Die Teilbereiche können als C2C (Car-to-Car) oder C2I (Car-to-Infrastructure) bezeichnet werden. Die Erfindung schließt jedoch Fahrzeug-zu-X-Kommunikation mit Vermittlung beispielsweise über ein Mobilfunknetz explizit nicht aus.

Erwähnte Schritte des erfindungsgemäßen Verfahrens können in der angegebenen Reihenfolge ausgeführt werden. Sie können jedoch auch in einer anderen Reihenfolge ausgeführt werden. Ein erfindungsgemäßes Verfahren kann in einer seiner Ausführungen, beispielsweise mit einer bestimmten Zusammenstellung von Schritten, in der Weise ausgeführt werden dass keine weiteren Schritte ausgeführt werden. Es können jedoch grundsätzlich auch weitere Schritte ausgeführt werden, auch solche welche nicht erwähnt sind.

Die zur Anmeldung gehörigen Ansprüche stellen keinen Verzicht auf die Erzielung weitergehenden Schutzes dar.

Sofern sich im Laufe des Verfahrens herausstellt, dass ein Merkmal oder eine Gruppe von Merkmalen nicht zwingend nötig ist, so wird anmelderseitig bereits jetzt eine Formulierung zumindest eines unabhängigen Anspruchs angestrebt, welcher das Merkmal oder die Gruppe von Merkmalen nicht mehr aufweist. Hierbei kann es sich beispielsweise um eine Unterkombination eines am Anmeldetag vorliegenden Anspruchs oder um eine durch weitere Merkmale eingeschränkte Unterkombination eines am Anmeldetag vorliegenden Anspruchs handeln. Derartige neu zu formulierende Ansprüche oder Merkmalskombinationen sind als von der Offenbarung dieser Anmeldung mit abgedeckt zu verstehen.

Es sei ferner darauf hingewiesen, dass Ausgestaltungen, Merkmale und Varianten der Erfindung, welche in den verschiedenen Ausführungen oder Ausführungsbeispielen beschriebenen und/oder in den Figuren gezeigt sind, beliebig untereinander kombinierbar sind. Einzelne oder mehrere Merkmale sind beliebig gegeneinander austauschbar. Hieraus entstehende Merkmalskombinationen sind als von der Offenbarung dieser Anmeldung mit abgedeckt zu verstehen.

Rückbezüge in abhängigen Ansprüchen sind nicht als ein Verzicht auf die Erzielung eines selbständigen, gegenständlichen Schutzes für die Merkmale der rückbezogenen Unteransprüche zu verstehen. Diese Merkmale können auch beliebig mit anderen Merkmalen kombiniert werden.

Merkmale, die lediglich in der Beschreibung offenbart sind oder Merkmale, welche in der Beschreibung oder in einem Anspruch nur in Verbindung mit anderen Merkmalen offenbart sind, können grundsätzlich von eigenständiger erfindungswesentlicher Bedeutung sein. Sie können deshalb auch einzeln zur Abgrenzung vom Stand der Technik in Ansprüche aufgenommen werden.

## Patentansprüche

1. Verfahren zum Bestimmen einer Kanallast in einer Fahrzeug-zu-X-Kommunikation, welches folgende Schritte aufweist:
- Empfangen einer Anzahl von Fahrzeug-zu-X-Nachrichten (40),
- Ermitteln einer Mehrzahl von Kanallastparametern basierend auf den Fahrzeug-zu-X-Nachrichten (40), und
- Ermitteln der Kanallast basierend zumindest auf den Kanallastparametern;
- wobei beim Schritt des Ermittelns der Kanallast eine erhöhte Kanallast ermittelt wird, wenn mehr als die Hälfte aller beim Schritt des Ermittelns der Kanallast berücksichtigten Kanallastparameter eine erhöhte Kanallast anzeigen;
- wobei ein Kanallastparameter der Mehrzahl von Kanallastparametern durch folgende Schritte ermittelt wird:
- Speichern jeder empfangenen Fahrzeug-zu-X-Nachricht (40) in einem Pufferspeicher (30), wobei Anwendungen (50, 55) jeweils zyklisch Fahrzeug-zu-X-Nachrichten (40) aus dem Pufferspeicher (30) auslesen, und
- Ermitteln des Kanallastparameters basierend auf der Anzahl von im Pufferspeicher gespeicherten Fahrzeug-zu-X-Nachrichten (40) .

2. Verfahren nach Anspruch 1,
- wobei ein Kanallastparameter durch Zählen der Anzahl von innerhalb einer vorgegebenen Zeitdauer empfangenen Fahrzeug-zu-X-Nachrichten (40) ermittelt wird.

3. Verfahren nach einem der vorhergehenden Ansprüche,
- wobei ein Kanallastparameter durch folgende Schritte ermittelt wird:
- Speichern jeder empfangenen Fahrzeug-zu-X-Nachricht (40) mit einem Zeitstempel, vorzugsweise aus einer internen Uhr (75),
- Ermitteln einer Zeitspanne zwischen zwei nacheinander empfangenen Fahrzeug-zu-X-Nachrichten (40), und
- Ermitteln des Kanallastparameters basierend auf der Zeitspanne, vorzugsweise durch Inversion der Zeitspanne.

4. Verfahren nach Anspruch 3,
- wobei der Kanallastparameter basierend auf einem Mittelwert oder einem Median einer vorgegebenen Anzahl von Zeitspannen ermittelt wird.

5. Verfahren nach einem der vorhergehenden Ansprüche,
- wobei ein Kanallastparameter durch folgende Schritte ermittelt wird:
- Speichern jeder empfangenen Fahrzeug-zu-X-Nachricht (40) in einem Pufferspeicher (30), wobei Anwendungen jeweils zyklisch Fahrzeug-zu-X-Nachrichten (40) aus dem Pufferspeicher (30) auslesen,
- Ermitteln, einer Anzahl von Fahrzeug-zu-X-Nachrichten (40) desselben Senders, welche im Pufferspeicher (30) gespeichert sind, und
- Ermitteln des Kanallastparameters basierend auf der Anzahl von Fahrzeug-zu-X-Nachrichten (40) desselben Senders.

6. Verfahren nach Anspruch 5,
- wobei zusätzlich ermittelt und beim Ermitteln des Kanallastparameters berücksichtigt wird, wie viele Fahrzeug-zu-X-Nachrichten (40) desselben Senders gleichen Typs sind.

7. Verfahren nach einem der vorhergehenden Ansprüche,
- wobei ein Kanallastparameter durch folgende Schritte ermittelt wird:
- Speichern von Fahrzeug-zu-X-Nachrichten (40), welche einer Authentifizierung zu unterziehen sind, in einem Security-Pufferspeicher (60), welcher vorzugsweise als First-In-First-Out (FiFo) -Pufferspeicher ausgebildet ist, wobei eine Security-Einheit (65) die Fahrzeug-zu-X-Nachrichten (40) aus dem Security-Pufferspeicher (60) ausliest und authentifiziert, und
- Ermitteln des Kanallastparameters basierend auf der Anzahl von im Security-Pufferspeicher (60) gespeicherten Nachrichten (40) .

8. Verfahren nach einem der vorhergehenden Ansprüche,
- wobei ein Kanallastparameter ein von einem Kommunikationschip empfangener Wert ist, welcher anzeigend ist für die Kanallast.

9. Verfahren nach einem der vorhergehenden Ansprüche,
- wobei beim Schritt des Ermittelns der Kanallast eine erhöhte Kanallast nur dann ermittelt wird, wenn einer oder mehrere Kanallastparameter über einen vorbestimmten Zeitraum eine erhöhte Kanallast anzeigen;
und/oder
- wobei beim Schritt des Ermittelns der Kanallast ein zeitlicher Tiefpass angewendet wird.

10. Verfahren nach einem der vorhergehenden Ansprüche,
- wobei jede Fahrzeug-zu-X-Nachricht (40) bei Verwendung in einer Ermittlung eines Kanallastparameters mit einem Komplexitätsfaktor gewichtet wird,
- wobei der jeweilige Komplexitätsfaktor vorzugsweise ein Maß für die zu erwartende Rechenlast in weiteren Verarbeitungsschritten ist.

11. Verfahren zum Einstellen einer Vorverarbeitung in einer Fahrzeug-zu-X-Kommunikation, welches folgende Schritte aufweist:
- Bestimmen einer Kanallast mittels eines Verfahrens gemäß einem der vorhergehenden Ansprüche,
- Ermitteln, ob die Kanallast über einen Vorverarbeitungsschwellenwert erhöht ist,
- und abhängig davon
- Durchführen einer Vorverarbeitung, insbesondere eines Ausfilterns von Fahrzeug-zu-X-Nachrichten (40), wenn die Kanallast über den Vorverarbeitungsschwellenwert erhöht ist, sowie
- nicht Durchführen einer Vorverarbeitung, insbesondere eines Ausfilterns von Fahrzeug-zu-X-Nachrichten (40), wenn die Kanallast nicht über den Vorverarbeitungsschwellenwert erhöht ist.

12. Verfahren nach Anspruch 11,
welches ferner folgende Schritte aufweist:
- Ermitteln, ob die Kanallast über einen Überwachungsschwellenwert erhöht ist, wobei der Überwachungsschwellenwert kleiner ist als der Vorverarbeitungsschwellenwert,
- und abhängig davon
- Durchführen einer Überwachung, wenn die Kanallast über den Überwachungsschwellenwert erhöht ist, sowie
- nicht Durchführen einer Überwachung, wenn die Kanallast nicht über den Überwachungsschwellenwert erhöht ist.

13. Fahrzeug-zu-X-Kommunikationssystem (10), welches zur Ausführung eines Verfahrens nach einem der vorhergehenden Ansprüche ausgebildet ist;
und/oder
computerlesbares Speichermedium, welches Programmcode enthält, bei dessen Ausführung durch einen Prozessor oder durch ein Fahrzeug-zu-X-Kommunikationssystem ein Verfahren nach einem der vorhergehenden Ansprüche ausgeführt wird.

## Claims

1. Method for determining a channel load in vehicle-to-X communication, comprising the following steps:
- receiving a number of vehicle-to-X messages (40),
- determining a plurality of channel load parameters on the basis of the vehicle-to-X messages (40), and
- determining the channel load on the basis of at least the channel load parameters;
- wherein an increased channel load is determined in the step of determining the channel load if more than half of all channel load parameters taken into account in the step of determining the channel load indicate an increased channel load;
- wherein a channel load parameter of the plurality of channel load parameters is determined using the following steps:
- storing each received vehicle-to-X message (40) in a buffer memory (30), wherein applications (50, 55) each cyclically read vehicle-to-X messages (40) from the buffer memory (30), and
- determining the channel load parameter on the basis of the number of vehicle-to-X messages (40) stored in the buffer memory.

2. Method according to Claim 1,
- wherein a channel load parameter is determined by counting the number of vehicle-to-X messages (40) received within a predefined period.

3. Method according to one of the preceding claims,
- wherein a channel load parameter is determined using the following steps:
- storing each received vehicle-to-X message (40) with a time stamp, preferably from an internal clock (75),
- determining a period of time between two vehicle-to-X messages (40) received in succession, and
- determining the channel load parameter on the basis of the period of time, preferably by inverting the period of time.

4. Method according to Claim 3,
- wherein the channel load parameter is determined on the basis of a mean value or a median of a predefined number of periods of time.

5. Method according to one of the preceding claims,
- wherein a channel load parameter is determined using the following steps:
- storing each received vehicle-to-X message (40) in a buffer memory (30), wherein applications each cyclically read vehicle-to-X messages (40) from the buffer memory (30),
- determining a number of vehicle-to-X messages (40) from the same transmitter which are stored in the buffer memory (30), and
- determining the channel load parameter on the basis of the number of vehicle-to-X messages (40) from the same transmitter.

6. Method according to Claim 5,
- wherein it is additionally determined and taken into account when determining the channel load parameter how many vehicle-to-X messages (40) from the same transmitter are of the same type.

7. Method according to one of the preceding claims,
- wherein a channel load parameter is determined using the following steps:
- storing vehicle-to-X messages (40), which are to be subjected to authentication, in a security buffer memory (60) which is preferably in the form of a first-in-first-out (FiFo) buffer memory, wherein a security unit (65) reads and authenticates the vehicle-to-X messages (40) from the security buffer memory (60), and
- determining the channel load parameter on the basis of the number of messages (40) stored in the security buffer memory (60).

8. Method according to one of the preceding claims,
- wherein a channel load parameter is a value which is received from a communication chip and is indicative of the channel load.

9. Method according to one of the preceding claims,
- wherein an increased channel load is determined in the step of determining the channel load only when one or more channel load parameters indicate an increased channel load over a predetermined period;
and/or
- wherein a temporal low-pass filter is used in the step of determining the channel load.

10. Method according to one of the preceding claims,
- wherein each vehicle-to-X message (40) is weighted with a complexity factor when used in determining a channel load parameter,
- wherein the respective complexity factor is preferably a measure of the expected computing load in further processing steps.

11. Method for adjusting preprocessing in vehicle-to-X communication, comprising the following steps:
- determining a channel load using a method according to one of the preceding claims,
- determining whether the channel load has increased above a preprocessing threshold value,
- and on the basis of this
- carrying out preprocessing, in particular filtering, of vehicle-to-X messages (40) if the channel load has increased above the preprocessing threshold value, and
- not carrying out preprocessing, in particular filtering, of vehicle-to-X messages (40) if the channel load has not increased above the preprocessing threshold value.

12. Method according to Claim 11,
which also has the following steps:
- determining whether the channel load has increased above a monitoring threshold value, wherein the monitoring threshold value is smaller than the preprocessing threshold value,
- and on the basis of this
- carrying out monitoring if the channel load has increased above the monitoring threshold value, and
- not carrying out monitoring the channel load has not increased above the monitoring threshold value.

13. Vehicle-to-X communication system (10) which is designed to carry out a method according to one of the preceding claims;
and/or
computer-readable storage medium containing program code, during the execution of which by a processor or by a vehicle-to-X communication system, a method according to one of the preceding claims is carried out.

## Revendications

1. Procédé d'identification d'une charge de canal dans une communication de véhicule à X, lequel comprend les étapes suivantes :
- réception d'un certain nombre de messages de véhicule à X (40),
- détermination d'une pluralité de paramètres de charge de canal en se basant sur les messages de véhicule à X (40), et
- détermination de la charge de canal en se basant au moins sur les paramètres de charge de canal ;
- lors de l'étape de détermination de la charge de canal, une charge de canal accrue étant déterminée lorsque plus de la moitié de tous les paramètres de charge de canal pris en compte lors de l'étape de détermination de la charge de canal indiquent une charge de canal accrue ;
- un paramètre de charge de canal de la pluralité de paramètres de charge de canal étant déterminé par les étapes suivantes :
- mémorisation de chaque message de véhicule à X (40) reçu dans une mémoire tampon (30), des applications (50, 55) lisant respectivement de manière cyclique des messages de véhicule à X (40) depuis la mémoire tampon (30), et
- détermination du paramètre de charge de canal en se basant sur le nombre de messages de véhicule à X (40) mémorisés dans la mémoire tampon.

2. Procédé selon la revendication 1,
- un paramètre de charge de canal étant déterminé par comptage du nombre de messages de véhicule à X (40) reçus au sein d'une durée prédéfinie.

3. Procédé selon l'une des revendications précédentes,
- un paramètre de charge de canal étant déterminé par les étapes suivantes :
- mémorisation de chaque message de véhicule à X (40) reçu avec un horodatage, de préférence issu d'une horloge interne (75),
- détermination d'un intervalle de temps entre deux messages de véhicule à X (40) reçus l'un après l'autre, et
- détermination du paramètre de charge de canal en se basant sur l'intervalle de temps, de préférence par inversion de l'intervalle de temps.

4. Procédé selon la revendication 3,
- le paramètre de charge de canal étant déterminé en se basant sur une moyenne ou une valeur médiane d'un nombre prédéfini d'intervalles de temps.

5. Procédé selon l'une des revendications précédentes,
- un paramètre de charge de canal étant déterminé par les étapes suivantes :
- mémorisation de chaque message de véhicule à X (40) reçu dans une mémoire tampon (30), des applications lisant respectivement de manière cyclique des messages de véhicule à X (40) depuis la mémoire tampon (30),
- détermination d'un nombre de messages de véhicule à X (40) du même émetteur qui sont mémorisés dans la mémoire tampon (30), et
- détermination du paramètre de charge de canal en se basant sur le nombre de messages de véhicule à X (40) du même émetteur.

6. Procédé selon la revendication 5,
- le nombre de messages de véhicule à X (40) du même émetteur qui sont du même type étant en outre déterminé et pris en compte lors de la détermination du paramètre de charge de canal.

7. Procédé selon l'une des revendications précédentes,
- un paramètre de charge de canal étant déterminé par les étapes suivantes :
- mémorisation des messages de véhicule à X (40) qui doivent être soumis à une authentification dans une mémoire tampon de sécurité (60), laquelle est de préférence réalisée sous la forme d'une mémoire tampon FiFo (First-In-First-Out - premier entré, premier sorti), une unité de sécurité (65) lisant les messages de véhicule à X (40) depuis la mémoire tampon de sécurité (60) et les authentifiant, et
- détermination du paramètre de charge de canal en se basant sur le nombre de messages de véhicule à X (40) dans la mémoire tampon de sécurité (60).

8. Procédé selon l'une des revendications précédentes,
- un paramètre de charge de canal étant une valeur reçue par une puce de communication, laquelle est indicative de la charge de canal.

9. Procédé selon l'une des revendications précédentes,
- lors de l'étape de détermination de la charge de canal, une charge de canal accrue n'étant déterminée que lorsqu'un ou plusieurs paramètres de charge de canal indiquent une charge de canal accrue sur une période prédéterminée ;
et/ou
- un passe-bas temporel étant employé lors de l'étape de détermination de la charge de canal.

10. Procédé selon l'une des revendications précédentes,
- chaque message de véhicule à X (40) étant pondéré avec un facteur de complexité lors de l'utilisation dans une détermination d'un paramètre de charge de canal,
- le facteur de complexité respectif étant de préférence une mesure pour la charge de calcul à attendre dans des étapes de traitement supplémentaires.

11. Procédé de réglage d'un prétraitement dans une communication de véhicule à X, lequel comprend les étapes suivantes :
- identification d'une charge de canal au moyen d'un procédé selon l'une des revendications précédentes,
- détermination si la charge de canal a augmenté au-dessus d'une valeur de seuil de prétraitement,
- et en fonction de cela
- exécution d'un prétraitement, notamment d'une élimination par filtrage de messages de véhicule à X (40), lorsque la charge de canal a augmenté au-dessus de la valeur de seuil de prétraitement, ainsi que
- non-exécution d'un prétraitement, notamment d'une élimination par filtrage de messages de véhicule à X (40), lorsque la charge de canal n'a pas augmenté au-dessus de la valeur de seuil de prétraitement.

12. Procédé selon la revendication 11,
lequel comprend en outre les étapes suivantes :
- détermination si la charge de canal a augmenté au-dessus d'une valeur de seuil de surveillance, la valeur de seuil de surveillance étant inférieure à la valeur de seuil de prétraitement,
- et en fonction de cela
- exécution d'une surveillance lorsque la charge de canal a augmenté au-dessus de la valeur de seuil de surveillance, ainsi que
- non-exécution d'une surveillance lorsque la charge de canal n'a pas augmenté au-dessus de la valeur de seuil de surveillance.

13. Système de communication de véhicule à X (10), lequel est configuré pour mettre en oeuvre un procédé selon l'une des revendications précédentes ;
et/ou
support d'enregistrement lisible par ordinateur, lequel contient un code de programme lors de l'exécution duquel par un processeur ou par un système de communication de véhicule à X, un procédé selon l'une des revendications précédentes est mis en oeuvre.
